# EUROPEAN PATENT APPLICATION

(11) **EP 4 782 681 A1**
(43) Date of publication of application: **29.07.2026**
(21) Application number: 26153456.4
(22) Date of filing: 22.01.2026
(51) Int. Cl.: F02P 11/00, F02P 11/06, B63H 21/21

(54) **A LANYARD SAFETY DEVICE**

(30) Priority: 27.01.2025 EP 25154189
(71) Applicant: Volvo Penta Corporation, 405 08 Göteborg (SE)
(72) Inventor: JERNLÅS, Julius, GÖTEBORG (SE); EGGERTZ, Henning, HOVÅS (SE); SILJEHOV, Peter, ULRICEHAMN (SE)
(74) Representative: Ström & Gulliksson AB

(57) **Abstract**

The present disclosure relates to a lanyard safety device for a marine helm station, comprising a base part comprising a socket, the socket having a first end, a second end and a housing extending between the first end and the second end, a circumferential inner groove is arranged in the housing, a mechanical fastening mechanism is arranged in the inner groove, a plug part configured to be attached to the socket of the base part, the plug part comprising a projection protruding from a plug head, the projection comprises a circumferential outer groove, wherein the plug part is releasable maintained in the base part by the mechanical fastening mechanism is attached to the outer groove.

## Description

### TECHNICAL FIELD

The disclosure relates generally to marine safety. In particular aspects, the disclosure relates to a lanyard safety device. The disclosure can be applied to marine vessels, such as watercrafts, motorboats, work boats, sport vessels, boats, ships, sailing boats among other vessel types. Although the disclosure may be described with respect to a particular marine vessel, the disclosure is not restricted to any particular marine vessel.

### BACKGROUND

In the realm of marine safety, the lanyard safety device has become a critical component at the helm station of vessels. Its primary function is to ensure that the vessel's engine or motor is immediately shut off in the event that the operator is displaced from the helm, thereby preventing accidents or runaway boats. However, despite the fundamental importance of these devices, current solutions exhibit significant shortcomings that can compromise both safety and user experience.

Current lanyard safety devices often suffer from issues related to the mechanical and material tolerances that define their holding force. Over time, wear and environmental exposure can exacerbate these tolerance issues, leading to inconsistent performance. In many instances, the holding force of the plug becomes excessively high, making it difficult for users to disengage the plug quickly and smoothly, which is critical in emergency situations. Conversely, in other cases, the holding force becomes too weak, resulting in the plug being unable to remain securely in place during normal operation. This inconsistency in holding force is a frequent point of frustration for users, reducing confidence in the reliability of the safety mechanism. US 2022/033046 A1 discloses a known solution.

The most concerning consequence of these tolerance and wear issues is that users have resorted to gluing the plug in place to ensure continuous operation of their vessel. This drastic measure not only defeats the purpose of having a detachable safety device but also introduces significant safety risks, as it prevents the automatic shutdown function from being triggered in emergencies. Such modifications underscore the inadequacy of current designs and highlight the urgent need for improvement.

To address these deficiencies, there is a need for advancements in lanyard safety device technology that ensure consistent and reliable performance despite tolerance variations and wear. Innovations must focus on achieving an optimal balance in holding force that enhances user experience without compromising safety. By addressing these challenges, the marine industry can significantly enhance the safety and functionality of lanyard safety devices, ensuring they fulfill their critical role at the helm station effectively.

### SUMMARY

According to a first aspect of the disclosure, a lanyard safety device for a marine helm station, comprising a base part comprising a socket, the socket having a first end, a second end and a housing extending between the first end and the second end, a circumferential inner groove is arranged in the housing, a mechanical fastening mechanism is arranged in the inner groove, a plug part configured to be attached to the socket of the base part, the plug part comprising a projection protruding from a plug head, the projection comprises a circumferential outer groove, wherein the plug part is releasable maintained in the base part by the mechanical fastening mechanism is attached to the outer groove.

The first aspect of the disclosure may seek to address issues related to the inconsistent holding force of lanyard plugs due to tolerance and wear, which can result in either excessive hold force or insufficient retention, compromising safety and user experience.

A technical benefit may include the use of a mechanical fastening mechanism that provides a consistent and reliable engagement, reducing the impact of wear and tolerance issues. This ensures the plug remains securely in place while allowing easy removal when necessary, offering significant improvement over prior art solutions that often require modification or result in user dissatisfaction.

Optionally in some examples, including in at least one preferred example, the mechanical fastening mechanism comprises a snap ring and a polymeric O-ring. A technical benefit may include enhancing the mechanical retention and environmental sealing of the plug, providing a robust and durable fastening solution.

Optionally in some examples, including in at least one preferred example, the snap ring is arranged inside the polymeric O-ring. A technical benefit may include improving the alignment and retention force of the plug, ensuring consistent and reliable engagement within the socket.

Optionally in some examples, including in at least one preferred example, the snap ring is configured to exert a radial force against the outer groove of the plug part to secure it within the socket. A technical benefit may include delivering a consistent retention force that maintains secure engagement, enhancing user confidence and safety.

Optionally in some examples, including in at least one preferred example, the snap ring and the polymeric O-ring are arranged in a cooperative manner, such that the snap ring maintains axial alignment of the plug part while the O-ring provides a sealing and biasing function in the radially direction. A technical benefit may include delivering a dual-function fastening solution that ensures proper alignment and environmental protection, enhancing device performance and longevity.

Optionally in some examples, including in at least one preferred example, the snap ring includes a beveled edge that facilitates the engagement and disengagement of the plug part from the socket. A technical benefit may include improving ease of use and reducing wear during operation, thereby extending the lifespan of the device.

Optionally in some examples, including in at least one preferred example, the outer groove comprises a first wall arranged distal in relation to the plug head, the first wall has an inner face and an outer face, wherein the inner face and the outer face are rounded. A technical benefit may include providing smoother engagement and reducing stress concentrations, thereby enhancing the durability and functionality of the plug connection.

Optionally in some examples, including in at least one preferred example, the base part comprises a first magnet being arranged at the second end, and the plug part comprises a second magnet arranged within the projection, wherein the plug part is releasable maintained in the base part by a magnetic fastening between the first magnet and the second magnet, wherein the magnetic fastening doubles as a proximity sensor. A technical benefit may include enhanced reliability and user experience by providing a consistent holding force that maintains the plug securely in place while allowing for easy disengagement when necessary. This is achieved through a combination of mechanical and magnetic fastening, which compensates for tolerance variations and minimizes wear-related degradation, thereby offering a significant improvement over prior art solutions that often require modification or result in user dissatisfaction.

Optionally in some examples, including in at least one preferred example, the first magnet and the second magnet are arranged with their poles in the same direction to increase the magnetic field, or opposite direction to reduce the magnetic field at the location of the magnetic field sensor. A technical benefit may include allowing for adjustable magnetic field strength to optimize sensor performance and plug retention, thus improving the adaptability and effectiveness of the device.

Optionally in some examples, including in at least one preferred example, a magnetic field strength is amplified or reduced, when the plug part is attached in the base part. A technical benefit may include providing dynamic control over the magnetic field for enhanced sensor accuracy and reliable plug retention, thereby ensuring consistent performance over time.

Optionally in some examples, including in at least one preferred example, a magnetic field sensor is arranged in the base part on an opposite side of the first magnet in relation to the plug part. A technical benefit may include ensuring accurate detection of the plug's presence and position, enhancing the reliability of the safety mechanism and providing real-time feedback for improved safety.

Optionally in some examples, including in at least one preferred example, the magnetic field sensor is configured to detect a magnetic field strength of the first magnet or the combination of the first magnet and the second magnet. A technical benefit may include enabling precise monitoring of magnetic interactions, allowing for responsive adjustments to the safety system based on real-time data.

Optionally in some examples, including in at least one preferred example, the magnetic field sensor is configured to detect a magnetic field strength is below or above a predetermined level. A technical benefit may include providing threshold-based monitoring to trigger safety actions, ensuring that the system responds appropriately to changes in magnetic field strength.

Optionally in some examples, including in at least one preferred example, the magnetic field sensor is operatively connected with a control unit. A technical benefit may include facilitating seamless integration with a control system for automated responses, enhancing the overall efficiency and safety of the marine helm station.

Optionally in some examples, including in at least one preferred example, the control unit is operatively connected with an engine or motor. A technical benefit may include providing direct control over critical vessel functions, ensuring that engine operations are contingent on the secure attachment of the plug, thereby enhancing vessel safety.

Optionally in some examples, including in at least one preferred example, the control unit based on output signals received from the magnetic field sensor controls if the engine or motor can start or shall stop. A technical benefit may include enabling automated safety protocols that prevent unauthorized or unsafe engine operations, thus safeguarding both the vessel and its operator.

Optionally in some examples, including in at least one preferred example, the control unit is configured to allow the engine or motor to start or stop if the magnetic field strength is above or below the predetermined level or if the magnetic field strength is changing increasing rapidly within a predetermined time span. A technical benefit may include offering adaptive control of engine operations based on dynamic safety assessments, enhancing both performance and protection.

According to a second aspect of the disclosure, a lanyard safety device for a marine helm station, comprising a base part comprising a socket, the socket having a first end, a second end and a housing extending between the first end and the second end, a circumferential inner groove is arranged in the housing, a mechanical fastening mechanism is arranged in the inner groove, a first magnet being arranged at the second end, a plug part configured to be attached to the socket of the base part, the plug part comprising a projection protruding from a plug head, the projection comprises a circumferential outer groove, a second magnet arranged within the projection, wherein the plug part is releasable maintained in the base part by a magnetic fastening between the first magnet and the second magnet and that the mechanical fastening mechanism is attached to the outer groove, wherein the magnetic fastening doubles as a proximity sensor.

The second aspect of the disclosure may seek to address issues related to the inconsistent holding force of lanyard plugs due to tolerance and wear, which can result in either excessive hold force or insufficient retention, compromising safety and user experience.

A technical benefit may include enhanced reliability and user experience by providing a consistent holding force that maintains the plug securely in place while allowing for easy disengagement when necessary. This is achieved through a combination of mechanical and magnetic fastening, which compensates for tolerance variations and minimizes wear-related degradation, thereby offering a significant improvement over prior art solutions that often require modification or result in user dissatisfaction.

According to a third aspect of the disclosure, a lanyard safety device for a marine helm station, comprising a base part comprising a socket, the socket having a first end, a second end and a housing extending between the first end and the second end, a first magnet being arranged at the second end, a plug part configured to be attached to the socket of the base part, the plug part comprising a projection protruding from a plug head, a second magnet arranged within the projection, wherein the plug part is releasable maintained in the base part by a magnetic fastening between the first magnet and the second magnet, wherein the magnetic fastening doubles as a proximity sensor.

The third aspect of the disclosure may seek to address issues related to the inconsistent holding force of lanyard plugs due to tolerance and wear, which can result in either excessive hold force or insufficient retention, compromising safety and user experience.

A technical benefit may include the use of magnetic fastening to provide a consistent and reliable engagement that reduces the impact of wear and tolerance issues, ensuring that the plug remains securely in place while allowing easy removal when needed. This approach offers a significant improvement over prior art solutions by integrating the magnetic fastening as a proximity sensor, adding an additional layer of functionality and safety without increasing the complexity of the device.

According to a fourth aspect of the disclosure, a marine helm station comprising the lanyard safety device as disclosed herein.

The fourth aspect of the disclosure may seek to address issues related to the inconsistent holding force of lanyard plugs due to tolerance and wear, which can result in either excessive hold force or insufficient retention, compromising safety and user experience.

A technical benefit may include integrating a lanyard safety device that provides consistent and reliable engagement, reducing the impact of wear and tolerance issues. This ensures the plug remains securely in place while allowing easy removal when necessary, significantly improving the safety and reliability of the marine helm station compared to prior art solutions.

According to a fifth aspect of the disclosure, a marine vessel comprising an engine and/or a motor and the marine helm station as disclosed herein.

The fifth aspect of the disclosure may seek to address issues related to the inconsistent holding force of lanyard plugs due to tolerance and wear, which can result in either excessive hold force or insufficient retention, compromising safety and user experience.

A technical benefit may include ensuring that the marine vessel is equipped with a helm station that incorporates a consistent and reliable lanyard safety device, thereby enhancing the operational safety of the vessel. This improvement over prior art solutions ensures that the lanyard safety mechanism functions effectively, providing users with increased confidence and security.

According to a sixth aspect of the disclosure, a method for securing a plug part to a base part of a lanyard safety device as disclosed herein for a marine helm station, comprising
aligning a projection of the plug part with a socket of the base part, the socket a mechanical fastening mechanism in an inner groove;
inserting the projection into the socket;
engaging the mechanical fastening mechanism with a circumferential outer groove on the projection to releasably maintain the plug part in the socket.

The sixth aspect of the disclosure may seek to address issues related to the inconsistent holding force of lanyard plugs due to tolerance and wear, which can result in either excessive hold force or insufficient retention, compromising safety and user experience.

A technical benefit may include providing a method that ensures the consistent and reliable engagement of the plug part with the base part. This method reduces the impact of wear and tolerance issues, ensuring secure retention and easy removal, when necessary, thus greatly improving upon prior art methods that may lead to user dissatisfaction and safety risks.

Optionally in some examples, including in at least one preferred example, the socket comprising a first magnet at its second end; inserting the projection into the socket such that a second magnet within the projection is positioned adjacent to the first magnet, establishing a magnetic fastening between the first magnet and the second magnet; utilizing the magnetic fastening as a proximity sensor to detect the presence of the plug part within the base part.

Optionally in some examples, including in at least one preferred example, further comprises detecting a magnetic field strength of the first magnet using a magnetic field sensor arranged in the base part on an opposite side of the first magnet in relation to the plug part. A technical benefit may include providing accurate and reliable monitoring of the plug's presence, enhancing the safety features of the device and ensuring proper operation.

Optionally in some examples, including in at least one preferred example, further comprises amplifying or reducing the magnetic field strength when the plug part is fully inserted into the base part. A technical benefit may include allowing for adaptive control of the magnetic field, optimizing sensor performance and ensuring consistent device operation.

Optionally in some examples, including in at least one preferred example, further comprises configuring the magnetic field sensor to detect when the magnetic field strength has changed compared to a predetermined level, indicating detachment of the plug part. A technical benefit may include enabling automated alerts and responses to changes in plug status, enhancing the safety and reliability of the helm station.

Optionally in some examples, including in at least one preferred example, further comprises operatively connecting the magnetic field sensor with a control unit to monitor the magnetic field strength. A technical benefit may include facilitating integration with a control system for real-time monitoring and automated responses, enhancing the overall safety and functionality of the marine vessel.

Optionally in some examples, including in at least one preferred example, further comprises controlling an engine or motor based on output signals from the magnetic field sensor, wherein the engine or motor operation is dependent on the detected magnetic field strength. A technical benefit may include providing automated control over critical vessel functions, ensuring that engine operations are contingent on the secure attachment of the plug, thereby enhancing safety.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary lanyard safety device according to an example shown in exploded view.
**FIGS. 2-3** show the lanyard safety device where the plug part is not connected.
**FIGS. 4-6** shows the lanyard safety device where the plug part is connected.
**FIG. 7** shows a marine vessel having a helm station.

### DETAILED DESCRIPTION

The detailed description set forth below provides information and examples of the disclosed technology with sufficient detail to enable those skilled in the art to practice the disclosure.

Lanyard safety devices are essential at the helm station to shut off a vessel's engine or motor if the operator is displaced, preventing accidents and runaway boats. It is furthermore a safety device that ensure that the engine or motor cannot start without the safety device being present. However, these devices face issues with mechanical and material tolerances affecting their holding force, leading to inconsistent performance. Over time, wear and environmental factors can exacerbate these problems, resulting in holding forces that are either too high or too weak. This inconsistency frustrates users and undermines trust in the device's reliability. Some users resort to gluing the plug in place, which negates its safety function and poses additional risks. Thus, there is a crucial need for advancements in lanyard safety devices to ensure consistent performance, balancing holding force to enhance user experience and safety. Addressing these challenges will improve the effectiveness and reliability of these critical safety components.

By the present disclosure an improved reliability and user experience is obtained by ensuring a consistent holding force that keeps the plug securely in place while allowing easy disengagement when needed. This is accomplished through a blend of mechanical and/or magnetic fastening, which addresses tolerance variations and reduces wear-related degradation. This approach significantly enhances performance compared to previous solutions, which often need modification or lead to user dissatisfaction.

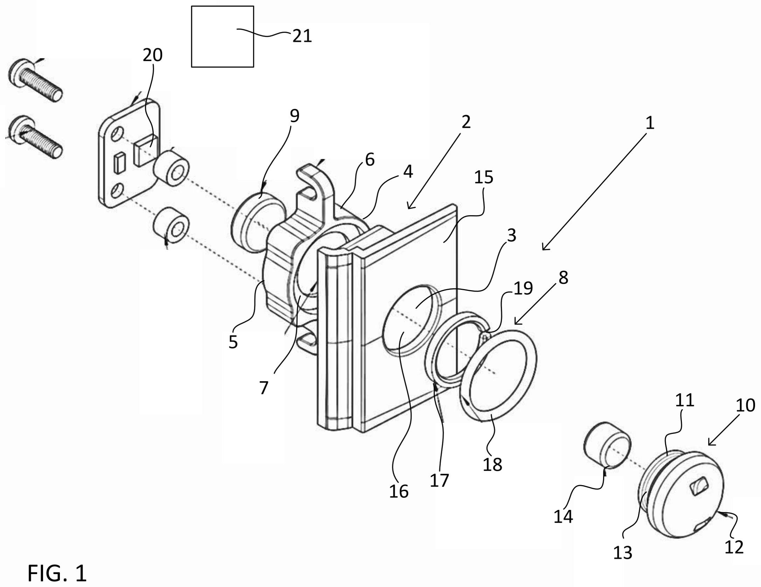

**FIG. 1** is an exemplary lanyard safety device **1** according to an example. The lanyard safety device **1** is shown in an exploded view. The lanyard safety device **1** comprises a base part **2.** The base part **2** comprises a socket **3,** the socket **3** having a first end **4,** a second end **5** and a housing **6** extending between the first end and the second end, a circumferential inner groove **7** is arranged in the housing **6.** In addition, a mechanical fastening mechanism **8** is arranged in the inner groove **7,** and a first magnet **9** being arranged at the second end **5.**

In addition, the lanyard safety device **1** also comprises a plug part **10.** The plug part **10** is configured to be attached to the socket **3** of the base part **2,** the plug part **10** comprises a projection **11** protruding from a plug head **12,** the projection **11** comprises a circumferential outer groove **13.** In the example, a second magnet **14** is arranged within the projection **11.** According to the disclosure, the plug part **10** is releasable maintained in the base part **2** by a magnetic fastening between the first magnet **9** and the second magnet **14** and that the mechanical fastening mechanism **8** is attached to the outer groove **13** of the plug part **10.** In addition, the magnetic fastening doubles as a proximity sensor.

The proximity sensor functions as a critical component for detecting the presence or absence of the plug part **10** within the base part **2.** The sensor operates by detecting changes in the magnetic field strength between the first magnet in the socket and the second magnet in the projection of the plug part. When the plug part is correctly positioned and secured in the base part, the proximity sensor detects a specific magnetic field strength, signaling that the plug is in place. Conversely, if the plug is removed or improperly seated, the magnetic field strength changes, triggering the sensor to alert the system. This functionality enables the automatic shutdown of the vessel's engine or motor in emergency situations, enhancing safety by ensuring the system responds swiftly to changes in plug status. The proximity sensor thus plays a pivotal role in maintaining operational safety and reliability by providing real-time feedback on the plug's engagement with the base part.

The solution of the present disclosure combines magnetic and mechanical solutions to generate the holding force of the plug part **10** in relation to the base part **2.** Compared to today's known solution, the magnet that triggers a detection of the magnetic field is now in the plug part itself rather than in a part that is pushed/moved when the plug part is pressed in. The magnetic plug part helps to guide the plug into the attachment area of the socket and may hold the plug part in place lightly even if the mechanical fastening mechanism is not functioning as intended.

Furthermore, a cover plate **15** is arranged in front of the base part **2** so that the base part **2** is protected and maintained in position. The cover plate **15** has an opening **16** through which the plug part **10** may be inserted into the socket.

The mechanical fastening mechanism 8 may comprise a snap ring **17** and a polymeric O-ring **18.** A technical benefit may include enhancing the mechanical retention and environmental sealing of the plug, providing a robust and durable fastening solution. The snap ring **17** is arranged inside the polymeric O-ring **18.** A technical benefit may include improving the alignment and retention force of the plug, ensuring consistent and reliable engagement within the socket. The snap ring **17** may have a slit **19** for providing the snap-action and ensuring that the projection of the plug part during insertion may expand the inner diameter of the snap ring by enlarging the slit **19.** In such as circumstance, the snap ring **17** may be called a split snap ring. Additionally, the polymeric O-ring **18** may be made of an elastic material. A technical benefit may include providing flexibility and sealing capability, absorbing shocks, and accommodating tolerance variations for a more reliable fastening.

In addition, the first magnet **9** and the second magnet **14** may be arranged with their poles in the same direction to increase the magnetic field, or opposite direction to reduce the magnetic field at the location of a magnetic field sensor **20.** A technical benefit may include allowing for adjustable magnetic field strength to optimize sensor performance and plug retention, thus improving the adaptability and effectiveness of the device. A magnetic field strength may be amplified or reduced, when the plug part **10** is attached in the base part **2.** A technical benefit may include providing dynamic control over the magnetic field for enhanced sensor accuracy and reliable plug retention, thereby ensuring consistent performance over time.

Moreover, the first magnet **9** and the second magnet **14** may comprise a base magnet, the base magnet may comprise neodymium, steel, or other metals, and/or can be an electromagnet. A technical benefit may include offering flexibility in the choice of magnetic materials to suit specific performance requirements, enhancing durability and magnetic strength for various operational conditions.

The magnetic field sensor **20** may be arranged in the base part **2** on an opposite side of the first magnet **9** in relation to the plug part **10.** A technical benefit may include ensuring accurate detection of the plug's presence and position, enhancing the reliability of the safety mechanism and providing real-time feedback for improved safety. The magnetic field sensor **20** may also be arranged in a separate part of the device.

The magnetic field sensor **20** may be configured to detect a magnetic field strength of the first magnet **9** or the combination of the first magnet **9** and the second magnet **14.** A technical benefit may include enabling precise monitoring of magnetic interactions, allowing for responsive adjustments to the safety system based on real-time data.

Furthermore, the magnetic field sensor **20** may be a Magneto-resistive sensor, a Micro Electronic Mechanical Systems (MEMS) sensor, a hall sensor, or similar sensors configured to detect a magnetic field, or a combination thereof. A technical benefit may include offering a selection of advanced sensor technologies to suit specific application needs, improving the precision and reliability of the safety system.

According to the disclosure, the magnetic field sensor **20** may be configured to detect a magnetic field strength is below or above a predetermined level. A technical benefit may include providing threshold-based monitoring to trigger safety actions, ensuring that the system responds appropriately to changes in magnetic field strength.

When the magnetic field sensor **20** output above a chosen level or output changes in the magnetic field fast enough within a software defined time span this may be judged as "plug attached" and thus allowing motor or engine to start. In the opposite situation, when the magnetic field sensor **20** output below the chosen level or output changes in the magnetic field fast enough within a software defined time span this may be judged as "plug detached" and thus stop the motor or engine or hindering the motor or engine to be started..

The magnetic field sensor **20** may be operatively connected with a control unit **21.** A technical benefit may include facilitating seamless integration with a control system for automated responses, enhancing the overall efficiency and safety of the marine helm station. The control unit **21** may include a microprocessor, microcontroller, programmable digital signal processor or another programmable device. The control unit **21** may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In addition, the control unit **21** may be operatively connected with an engine or motor. A technical benefit may include providing direct control over critical vessel functions, ensuring that engine operations are contingent on the secure attachment of the plug, thereby enhancing vessel safety. The control unit **21,** based on output signals received from the magnetic field sensor **20,** may control if the engine or motor can start or shall stop. A technical benefit may include enabling automated safety protocols that prevent unauthorized or unsafe engine operations, thus safeguarding both the vessel and its operator.

Also, the magnetic field sensor **20** may be configured to detect the magnetic field strength continuously. A technical benefit may include providing continuous monitoring for real-time safety assurance, ensuring that any changes in plug status are immediately detected and addressed.

The control unit **21** may be configured to allow the engine or motor to start or stop if the magnetic field strength is above or below the predetermined level or if the magnetic field strength is changing increasing rapidly within a predetermined time span. A technical benefit may include offering adaptive control of engine operations based on dynamic safety assessments, enhancing both performance and protection.

Additionally, the magnetic field sensor **20** may be arranged inside a sealed environment, and/or is self-sealed. A technical benefit may include protecting sensitive components from environmental factors, ensuring long-term reliability and performance of the safety system.

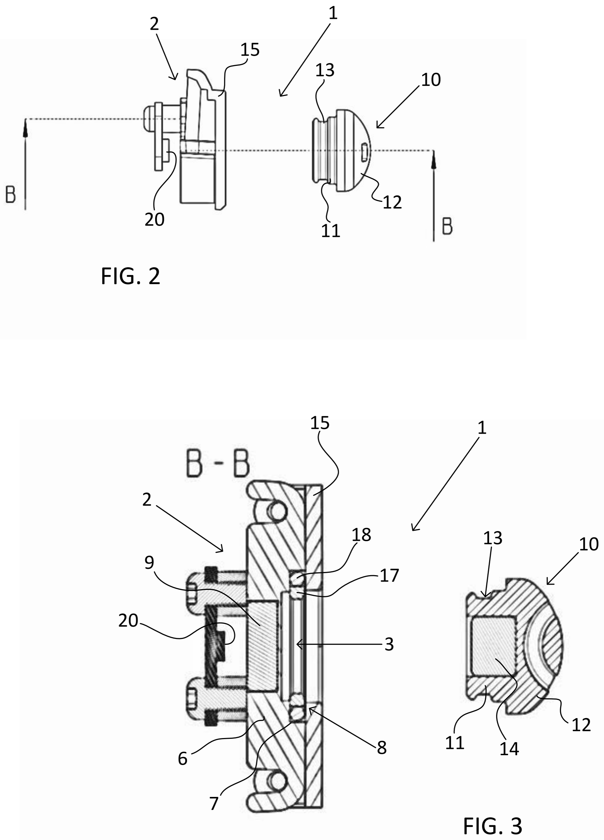

**FIGS. 2-3** show in a side view the plug part **10** aligned with the base part **2,** but not inserted in the socket. **FIG. 2** shows the lanyard safety device **1** from the outside, and **FIG. 3** is a cross-sectional view taken along the line B-B in **FIG. 2****.**

As shown in **FIGS. 2-3****,** the lanyard safety device **1** comprises the base part **2.** The base part **2** comprises the socket **3,** the socket **3** having the first end, the second end and the housing **6** extending between the first end and the second end, a circumferential inner groove **7** is arranged in the housing **6.** In addition, a mechanical fastening mechanism **8** is arranged in the inner groove **7,** and a first magnet 9 being arranged at the second end **5.** The circumferential inner groove **7** is in the present example covered by the cover plate **15.**

In addition, the lanyard safety device **1** also comprises the plug part **10** arranged in alignment with the base part **2** so that it may be inserted in the base part **2.** The plug part **10** is configured to be attached to the socket **3** of the base part **2,** the plug part **10** comprises a projection **11** protruding from a plug head **12,** the projection **11** comprises a circumferential outer groove **13.** In the example, a second magnet **14** is arranged within the projection **11.** According to the disclosure, the plug part **10** is releasable maintained in the base part **2** by a magnetic fastening between the first magnet **9** and the second magnet **14** and that the mechanical fastening mechanism **8** is attached to the outer groove **13** of the plug part **10.** In addition, the magnetic fastening doubles as a proximity sensor. The magnetic field sensor **20** is arranged at the opposite side of the plug part **10.**

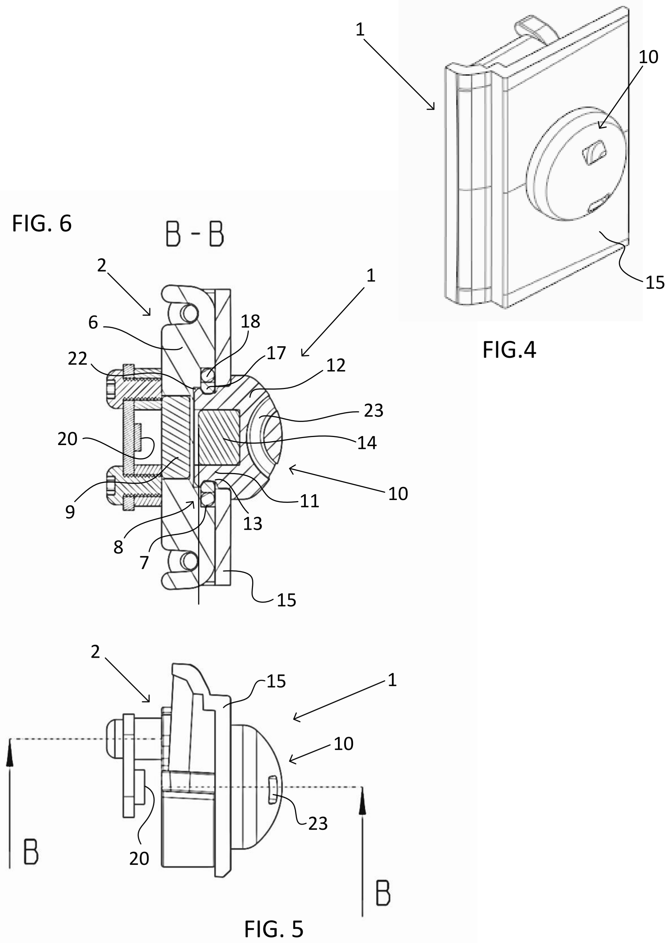

In **FIG. 4****,** the lanyard safety device **1** us shown from in an outside view, where the plug part **10** is arranged in the socket. A cover plate **15** is hiding the base part.

**FIGS. 5-6** show in a side view the plug part **10** inserted in the socket of the base part **2.** **FIG. 5** shows the lanyard safety device **1** from the outside, and **FIG. 6** is a cross-sectional view taken along the line B-B in **FIG. 5****.** The snap ring **17** is configured to exert a radial force against the outer groove **13** of the plug part **10** to secure it within the socket. A technical benefit may include delivering a consistent retention force that maintains secure engagement, enhancing user confidence and safety. The snap ring **17** may be made of an injection molded polymeric material to provide durability and consistent retention force over repeated use. A technical benefit may include offering a cost-effective and resilient fastening solution that withstands environmental stresses and repeated use.

As seen in **FIG. 6****,** the snap ring **17** and the polymeric O-ring **18** are arranged in a cooperative manner, such that the snap ring maintains axial alignment of the plug part **10** while the O-ring provides a sealing and biasing function in the radially direction. A technical benefit may include delivering a dual-function fastening solution that ensures proper alignment and environmental protection, enhancing device performance and longevity.

Moreover, the snap ring **17** may comprise a beveled edge that facilitates the engagement and disengagement of the plug part from the socket. A technical benefit may include improving ease of use and reducing wear during operation, thereby extending the lifespan of the device.

When plug part **10** is pressed into the base part **2,** the split snap-ring **17** is pushed open, compressing the O-ring **18** and allowing the plug part to settle in the base part. The shape of this feature on the plug part can be adapted to achieve easier entry of the plug part and stronger holding force against pulling it out.

Also, the polymeric O-ring **18** may be positioned adjacent to the snap ring **17** to absorb vibrations and reduce wear on the snap ring during the attachment and detachment of the plug part **10.** A technical benefit may include minimizing mechanical stress and enhancing the durability of the fastening system, leading to improved reliability and user experience.

As seen in **FIG. 6****,** the outer groove **13** may comprise a first wall arranged distal in relation to the plug head **12,** the first wall **22** has an inner face and an outer face, wherein the inner face and the outer face are rounded. A technical benefit may include providing smoother engagement and reducing stress concentrations, thereby enhancing the durability and functionality of the plug connection. Moreover, the plug part may further comprise an alignment guide configured to facilitate correct positioning when attaching the plug part to the base part. A technical benefit may include aiding users in achieving proper alignment quickly and easily, reducing errors and improving overall device performance.

The plug head **12** may be ergonomically shaped to allow easy handling and attachment to the socket. A technical benefit may include enhancing user comfort and ease of use, making the device more accessible and reducing the likelihood of operational errors. The plug head **12** may also comprise attachment means **23.** A strap or string may be attached to the attachment means so that the plug part may be fasten the opposite end to a person or the helm station.

In an example, the mechanical fastening mechanism **8** may be is configured to provide an audible click and/or tactile feedback when the plug part is properly secured to the base part. A technical benefit may include providing immediate user feedback for confirmation of secure engagement, enhancing user confidence and reducing the risk of improper attachment. Also, the mechanical fastening mechanism may include a biasing element to enhance the retention force of the plug part in the base part. A technical benefit may include compensating for wear and tolerance variations over time, ensuring consistent retention force and enhancing device reliability.

Moreover, the mechanical fastening mechanism **8** may be constructed to permit rotational movement of the plug part **10** when engaged with the base part **2.** A technical benefit may include providing flexibility in positioning and reducing stress on the plug, thereby enhancing the longevity and performance of the device.

Furthermore, the plug part **10** may comprise a built-in light source to enhance visibility in low-light conditions. A technical benefit may include improving user safety and ease of operation in challenging environments, ensuring that the device can be used effectively at all times.

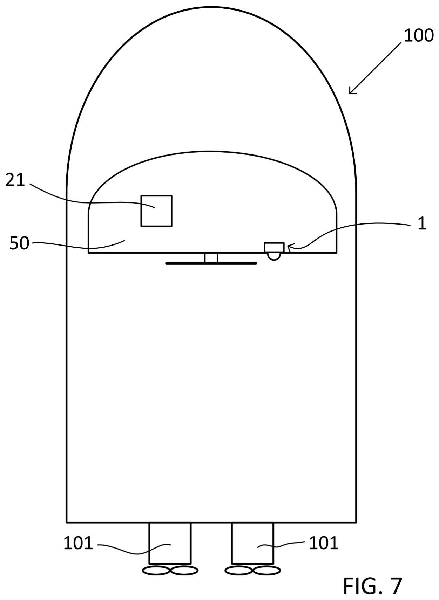

In **FIG. 7****,** a marine vessel **100** is shown. The marine vessel **100** may comprise two motors or engines **101** as propulsion. In other examples, the marine vessel may comprise another number of motors or engines, and also one engine. The motors may be an electric motor, and the engine may be a combustion engine, or any combination thereof. The marine vessel **100** also comprises a marine helm station **50.** The lanyard safety device **1** may be arranged at the helm station **50** for easy access for the operator of the marine vessel **100.** A technical benefit may include integrating the lanyard safety device **1** into the marine vessel's propulsion system, thereby enhancing operational safety and ensuring compliance with safety regulations.

The present disclosure also relates to a method for securing a plug part **10** to a base part **2** of a lanyard safety device **1** as disclosed herein. The method comprising
- aligning a projection **11** of the plug part **10** with a socket **3** of the base part, the base part comprising a mechanical fastening mechanism **8** in an inner groove of a housing;
- inserting the projection **11** into the socket;
- engaging the mechanical fastening mechanism **8** with a circumferential outer groove **13** on the projection **11** to releasably maintain the plug part **10** in the socket. A technical benefit may include providing a systematic approach to securing the plug part **10,** ensuring reliable engagement and enhancing the overall safety and functionality of the helm station.

In another aspect the present disclosure may also relate to a method for securing a plug part **10** to a base part **2** of a lanyard safety device **1** as disclosed herein. The method comprising
aligning a projection **11** of the plug part **10** with a socket **3** of the base part **2,** the socket **3** comprising a first magnet **9** at its second end and a mechanical fastening mechanism **8** in an inner groove **7;**
inserting the projection **11** into the socket **3** such that a second magnet **14** within the projection **11** is positioned adjacent to the first magnet **9,** establishing a magnetic fastening between the first magnet **9** and the second magnet **14;**
engaging the mechanical fastening mechanism **8** with a circumferential outer groove **13** on the projection **11** to releasably maintain the plug part **10** in the socket **3;**
utilizing the magnetic fastening as a proximity sensor to detect the presence of the plug part **10** within the base part **2.** A technical benefit may include providing a systematic approach to securing the plug part **10,** ensuring reliable engagement and enhancing the overall safety and functionality of the helm station.

The method may further comprise detecting a magnetic field strength of the first magnet **9** using a magnetic field sensor **20** arranged in the base part on an opposite side of the first magnet **9** in relation to the plug part **10.** A technical benefit may include providing accurate and reliable monitoring of the plug part's **10** presence, enhancing the safety features of the device **1** and ensuring proper operation. The magnetic field sensor **20** may also detect the magnetic field strength of the first magnet **9** and the second magnet **14** when the plug part is inserted in the base part.

Additionally, the method may further comprise amplifying or reducing the magnetic field strength when the plug part **10** is fully inserted into the base part **2.** A technical benefit may include allowing for adaptive control of the magnetic field, optimizing sensor performance and ensuring consistent device operation.

Also, the method may further comprise configuring the magnetic field sensor **20** to detect when the magnetic field strength has changed compared to a predetermined level, indicating detachment of the plug part **10.** A technical benefit may include enabling automated alerts and responses to changes in plug status, enhancing the safety and reliability of the helm station.

The method may further comprise operatively connecting the magnetic field sensor **20** with a control unit **21** to monitor the magnetic field strength. A technical benefit may include facilitating integration with a control system for real-time monitoring and automated responses, enhancing the overall safety and functionality of the marine vessel.

The method may furthermore comprise controlling an engine or motor based on output signals from the magnetic field sensor **20,** wherein the engine or motor operation is dependent on the detected magnetic field strength. A technical benefit may include providing automated control over critical vessel functions, ensuring that engine operations are contingent on the secure attachment of the plug, thereby enhancing safety.

The method may further comprise preventing the engine or motor from starting or stopping the engine or motor, if the magnetic field strength is below the predetermined level. A technical benefit may include ensuring that the vessel remains in a safe operational state, preventing unauthorized or unsafe engine use and enhancing overall safety.

Moreover, the method may further comprise allowing the engine or motor to start or run if the magnetic field strength is above the predetermined level or increases rapidly within a predetermined time span. A technical benefit may include providing flexibility and adaptability in engine control, ensuring that the vessel can operate safely under varying conditions.

In addition, the method may further comprise arranging the magnetic field sensor **20** inside a sealed environment within the base part **2** or near thereto to protect it from external elements. A technical benefit may include protecting sensitive components from environmental factors, ensuring long-term reliability and performance of the safety system. The magnetic field sensor may also self-sealed.

The method may further comprise continuously detecting the magnetic field strength with the magnetic field sensor **20** to ensure the presence of the plug part 10 within the base part **2.** A technical benefit may include providing continuous monitoring for real-time safety assurance, ensuring that any changes in plug status are immediately detected and addressed.

The present disclosure also relates to a lanyard safety device for a marine helm station, comprising a base part comprising a socket, the socket having a first end, a second end and a housing extending between the first end and the second end, a first magnet being arranged at the second end, a plug part configured to be attached to the socket of the base part, the plug part comprises a projection protruding from a plug head, a second magnet arranged within the projection, wherein the plug part is releasable maintained in the base part by a magnetic fastening between the first magnet and the second magnet, wherein the magnetic fastening doubles as a proximity sensor. In contrast to current solutions, the magnet that enhance the magnetic field, so it is detectable, is now incorporated within the plug part itself, rather than being part of a mechanism that is moved when the plug part is inserted in the socket. This magnetic plug part assists in guiding the plug part into the socket of the base part and may also be used as a magnetic fastening so that the plug part may be hold it in place.

Additionally, a circumferential inner groove may be arranged in the housing, and a mechanical fastening mechanism is arranged in the inner groove, the projection of the plug part comprises a circumferential outer groove, wherein the plug part is releasable maintained in the base part by the mechanical fastening mechanism is attached to the outer groove. A technical benefit may include providing consistent retention of the plug part through mechanical engagement, reducing the impact of wear and tolerance issues while enhancing user experience and safety.

The present disclosure also relates to a lanyard safety device for a marine helm station, comprising a base part. The base part comprises a socket, the socket having a first end, a second end and a housing extending between the first end and the second end, a circumferential inner groove is arranged in the housing, and a mechanical fastening mechanism is arranged in the inner groove. In addition, a plug part is configured to be attached to the socket of the base part, the plug part comprises a projection protruding from a plug head, the projection comprises a circumferential outer groove, wherein the plug part is releasable maintained in the base part by the mechanical fastening mechanism is attached to the outer groove. When the plug part is pressed into the base, the mechanical fastening mechanism is activated to receive the projection of the plug part. When the plug part is positioned and settled in its intended position the mechanical fastening mechanism is configured to hold the plug part in place with a predetermined holding force. The shape of the mechanical fastening mechanism and the corresponding feature of the plug part ensure an easier entry of the plug part into the socket of the base part and a stronger holding force against pulling it out.

Furthermore, a first magnet may be arranged at the second end of the housing, a second magnet arranged within the projection of the plug part, wherein the plug part is releasable maintained in the base part by a magnetic fastening between the first magnet and the second magnet and that the mechanical fastening mechanism is attached to the outer groove, wherein the magnetic fastening doubles as a proximity sensor. A technical benefit may include enhancing the reliability of plug retention and providing an additional safety feature through magnetic proximity sensing, thereby offering improved operational safety and user confidence.

Certain aspects and variants of the disclosure are set forth in the following examples numbered consecutive below.

Example 1: A lanyard safety device (1) for a marine helm station (50), comprising a base part (2) comprising a socket (3), the socket (3) having a first end (4), a second end (5) and a housing (6) extending between the first end and the second end (4,5), a circumferential inner groove (7) is arranged in the housing, a mechanical fastening mechanism (8) is arranged in the inner groove (7), a first magnet (9) being arranged at the second end (5), a plug part (10) configured to be attached to the socket (3) of the base part, the plug part (10) comprising a projection (11) protruding from a plug head (12), the projection (11) comprises a circumferential outer groove (13), a second magnet (14) arranged within the projection (11), wherein the plug part (10) is releasable maintained in the base part (2) by a magnetic fastening between the first magnet (9) and the second magnet (14) and that the mechanical fastening mechanism (8) is attached to the outer groove (13), wherein the magnetic fastening doubles as a proximity sensor.

Example 2: A lanyard safety device (1) for a marine helm station (50), comprising a base part (2) comprising a socket (3), the socket having a first end (4), a second end (5) and a housing (6) extending between the first end and the second end, a first magnet (9) being arranged at the second end, a plug part (10) configured to be attached to the socket (3) of the base part, the plug part (10) comprising a projection (11) protruding from a plug head (12), a second magnet (14) arranged within the projection (11), wherein the plug part (10) is releasable maintained in the base part by a magnetic fastening between the first magnet (9) and the second magnet (14), wherein the magnetic fastening doubles as a proximity sensor.

Example 3: A lanyard safety device (1) for a marine helm station (50), comprising a base part (2) comprising a socket (3), the socket (3) having a first end (4), a second end (5) and a housing (6) extending between the first end and the second end, a circumferential inner groove (7) is arranged in the housing (6), a mechanical fastening mechanism (8) is arranged in the inner groove (7), a plug part (10) configured to be attached to the socket (3) of the base part, the plug part (10) comprising a projection (11) protruding from a plug head (12), the projection (11) comprises a circumferential outer groove (13), wherein the plug part (10) is releasable maintained in the base part (2) by the mechanical fastening mechanism (8) is attached to the outer groove (13).

Example 4: The lanyard safety device (1) of example 2, wherein a circumferential inner groove (7) is arranged in the housing (6), and a mechanical fastening mechanism (8) is arranged in the inner groove (7), the projection (11) of the plug part (10) comprises a circumferential outer groove (13), wherein the plug part (10) is releasable maintained in the base part (2) by the mechanical fastening mechanism (8) is attached to the outer groove (13).

Example 5: The lanyard safety device (1) of example 3, wherein a first magnet (9) being arranged at the second end of the housing, a second magnet (14) arranged within the projection (11) of the plug part, wherein the plug part (10) is releasable maintained in the base part (2) by a magnetic fastening between the first magnet (9) and the second magnet (14) and that the mechanical fastening mechanism (8) is attached to the outer groove (13), wherein the magnetic fastening doubles as a proximity sensor.

Example 6: The lanyard safety device (1) of any of examples 1-5, wherein the first magnet (9) and the second magnet (14) are arranged with their poles in the same direction to increase a magnetic field, or in opposite direction to reduce the magnetic field at the location of a magnetic field sensor (20).

Example 7: The lanyard safety device (1) of any of examples 1-6, wherein the magnetic field strength is amplified or reduced, when the plug part (10) is attached in the base part (2).

Example 8: The lanyard safety device (1) of any of examples 1-7, wherein the first magnet (9) and the second magnet (14) comprise a base magnet, the base magnet comprises neodymium, steel, or other metals, and/or can be an electromagnet.

Example 9: The lanyard safety device (1) of any of examples 1-8, wherein a magnetic field sensor (20) is arranged in the base part (2) on an opposite side of the first magnet (9) in relation to the plug part (10).

Example 10: The lanyard safety device (1) of example 9, wherein the magnetic field sensor (20) is configured to detect a magnetic field strength of the first magnet (9) or the combination of the first magnet (9) and the second magnet (14).

Example 11: The lanyard safety device (1) of any of examples 9-10, wherein the magnetic field sensor (20) is configured to detect a magnetic field strength is below or above a predetermined level.

Example 12: The lanyard safety device (1) of any of examples 9-11, wherein the magnetic field sensor (20) is operatively connected with a control unit (21).

Example 13: The lanyard safety device (1) of any of examples 9-12, wherein the magnetic field sensor (20) is a Magneto-resistive sensor, a Micro Electronic Mechanical Systems (MEMS) sensor, a hall sensor, or a similar sensor configured to detect a magnetic field, or a combination thereof.

Example 14: The lanyard safety device (1) of example 12, wherein the control unit (21) is operatively connected with an engine or motor.

Example 15: The lanyard safety device (1) of example 14, wherein the control unit (21) based on output signals received from the magnetic field sensor (20) controls if the engine or motor can start or shall stop.

Example 16: The lanyard safety device (1) of any of examples 9-15, wherein the magnetic field sensor (20) is configured to detect the magnetic field strength continuously.

Example 17: The lanyard safety device (1) of any of examples 12-16, wherein the control unit (21) is configured to allow the engine or motor to start or stop if the magnetic field strength is above or below the predetermined level or if the magnetic field strength is changing rapidly within a predetermined time span.

Example 18: The lanyard safety device (1) of any of examples 5-12, wherein the magnetic field sensor (20) is arranged inside a sealed environment, and/or is self-sealed.

Example 19: The lanyard safety device (1) of any of examples 1-18, wherein the mechanical fastening mechanism (8) comprises a snap ring (17) and a polymeric O-ring (18).

Example 20: The lanyard safety device (1) of example 19, wherein the snap ring (17) is arranged inside the polymeric O-ring (18).

Example 21: The lanyard safety device (1) of any of examples 19-20, wherein the polymeric O-ring (18) is made of an elastic material.

Example 22: The lanyard safety device (1) of any of examples 19-21, wherein the snap ring (17) is configured to exert a radial force against the outer groove (13) of the plug part (10) to secure it within the socket.

Example 23: The lanyard safety device (1) of any of examples 19-22, wherein the snap ring (17) is made of an injection molded polymeric material to provide durability and consistent retention force over repeated use.

Example 24: The lanyard safety device (1) of any of examples 19-23, wherein the snap ring (17) and the polymeric O-ring (18) are arranged in a cooperative manner, such that the snap ring (17) maintains axial alignment of the plug part (10) while the O-ring (18) provides a sealing and biasing function in the radially direction.

Example 25: The lanyard safety device (1) of any of examples 19-24, wherein the snap ring (17) includes a beveled edge that facilitates the engagement and disengagement of the plug part (10) from the socket.

Example 26: The lanyard safety device (1) of any of examples 19-25, wherein the polymeric O-ring (18) is positioned adjacent to the snap ring (17) to absorb vibrations and reduce wear on the snap ring during the attachment and detachment of the plug part.

Example 27: The lanyard safety device (1) of any of examples 1-26, wherein the outer groove (13) comprises a first wall (22) arranged distal in relation to the plug head (12), the first wall has an inner face and an outer face, wherein the inner face and the outer face are rounded.

Example 28: The lanyard safety device (1) of any of examples 1-27, wherein the plug part (10) further comprises an alignment guide configured to facilitate correct positioning when attaching the plug part to the base part.

Example 29: The lanyard safety device (1) of any of examples 1-28, wherein the plug head (12) is ergonomically shaped to allow easy handling and attachment to the socket.

Example 30: The lanyard safety device (1) of any of examples 1-29, wherein the first magnet (9) and second magnet (14) are coated with a corrosion-resistant material.

Example 31: The lanyard safety device (1) of any of examples 1-30, wherein the mechanical fastening mechanism (8) is configured to provide an audible click and/or tactile feedback when the plug part (10) is properly secured to the base part.

Example 32: The lanyard safety device (1) of any of examples 1-31, wherein the mechanical fastening mechanism (8) includes a biasing element to enhance the retention force of the plug part (10) in the base part.

Example 33: The lanyard safety device (1) of any of examples 1-32, wherein the mechanical fastening mechanism (8) is constructed to permit rotational movement of the plug part (10) when engaged with the base part.

Example 34: The lanyard safety device (1) of any of examples 1-33, wherein the plug part (10) comprises a built-in light source to enhance visibility in low-light conditions.

Example 35: A marine helm station (50) comprising the lanyard safety device (1) of any of the examples 1-34.

Example 36: A marine vessel (100) comprising an engine (101) and/or a motor and the marine helm station (50) of example 35.

Example 37: A method for securing a plug part (10) to a base part (2) of a lanyard safety device (1) of any of the examples 1-34 for a marine helm station (50), comprising aligning a projection (11) of the plug part (10) with a socket (3) of the base part, the base part comprising a first magnet (9) at its second end and a mechanical fastening mechanism (8) in an inner groove of a housing; inserting the projection (11) into the socket such that a second magnet (14) within the projection is positioned adjacent to the first magnet (9), establishing a magnetic fastening between the first magnet (9) and the second magnet (14); engaging the mechanical fastening mechanism (8) with a circumferential outer groove (13) on the projection (11) to releasably maintain the plug part (10) in the socket; utilizing the magnetic fastening as a proximity sensor to detect the presence of the plug part (10) within the base part (2).

Example 38: The method of example 37, further comprising detecting a magnetic field strength of the first magnet (9) or a combination of the first magnet and the second magnet, using a magnetic field sensor (20) arranged in the base part on an opposite side of the first magnet in relation to the plug part.

Example 39: The method of example 38, further comprising amplifying or reducing the magnetic field strength when the plug part is fully inserted into the base part.

Example 40: The method of any of examples 38-39, further comprising configuring the magnetic field sensor (20) to detect when the magnetic field strength has changed compared to a predetermined level, indicating detachment of the plug part.

Example 41: The method of any of examples 39-40, further comprising operatively connecting the magnetic field sensor (20) with a control unit (21) to monitor the magnetic field strength.

Example 42: The method of example 41, further comprising controlling an engine (101) or motor based on output signals from the magnetic field sensor, wherein the engine or motor operation is dependent on the detected magnetic field strength.

Example 43: The method of example 42, further comprising preventing the engine or motor from starting or stopping the engine or motor, if the magnetic field strength is below the predetermined level.

Example 44: The method of example 42, further comprising allowing the engine or motor to start or run if the magnetic field strength is above the predetermined level or increases rapidly within a predetermined time span.

Example 45: The method of any of examples 37-44, further comprising arranging the magnetic field sensor inside a sealed environment within the base part to protect it from external elements.

Example 46: The method of any of examples 37-45, further comprising continuously detecting the magnetic field strength with the magnetic field sensor (20) to ensure the presence of the plug part (10) within the base part.

Example 47: A lanyard safety device (1) for a marine helm station (50), comprising a base part (2) comprising a socket (3), the socket having a first end (4), a second end (5) and a housing (6) extending between the first end and the second end, a first magnet (9) being arranged at the second end, a plug part (10) configured to be attached to the socket (3) of the base part, the plug part (10) comprising a projection (11) protruding from a plug head (12), a second magnet (14) arranged within the projection (11), wherein the plug part (10) is releasable maintained in the base part by a magnetic fastening between the first magnet (9) and the second magnet (14), wherein the magnetic fastening doubles as a proximity sensor.

Example 48: The lanyard safety device (1) of example 47, wherein the first magnet (9) and the second magnet (14) are arranged with their poles in the same direction to increase a magnetic field, or in opposite direction to reduce the magnetic field at the location of a magnetic field sensor (20).

Example 49: The lanyard safety device (1) of any of examples 47-48, wherein the magnetic field strength is amplified or reduced, when the plug part (10) is attached in the base part (2).

Example 50: The lanyard safety device (1) of any of examples 47-49, wherein the first magnet (9) and the second magnet (14) comprise a base magnet, the base magnet comprises neodymium, steel, or other metals, and/or can be an electromagnet.

Example 51: The lanyard safety device (1) of any of examples 47-50, wherein a magnetic field sensor (20) is arranged in the base part (2) on an opposite side of the first magnet (9) in relation to the plug part (10).

Example 52: The lanyard safety device (1) of example 51, wherein the magnetic field sensor (20) is configured to detect a magnetic field strength of the first magnet (9) or the combination of the first magnet (9) and the second magnet (14).

Example 53: The lanyard safety device (1) of any of examples 51-52, wherein the magnetic field sensor (20) is configured to detect a magnetic field strength is below or above a predetermined level.

Example 54: The lanyard safety device (1) of any of examples 51-53, wherein the magnetic field sensor (20) is operatively connected with a control unit (21).

Example 55: The lanyard safety device (1) of any of examples 51-54, wherein the magnetic field sensor (20) is a Magneto-resistive sensor, a Micro Electronic Mechanical Systems (MEMS) sensor, a hall sensor, or a similar sensor configured to detect a magnetic field, or a combination thereof.

Example 56: The lanyard safety device (1) of example 54, wherein the control unit (21) is operatively connected with an engine or motor.

Example 57: The lanyard safety device (1) of example 56, wherein the control unit (21) based on output signals received from the magnetic field sensor (20) controls if the engine or motor can start or shall stop.

Example 58: The lanyard safety device (1) of any of examples 51-57, wherein the magnetic field sensor (20) is configured to detect the magnetic field strength continuously.

Example 59: The lanyard safety device (1) of any of examples 54-58, wherein the control unit (21) is configured to allow the engine or motor to start or stop if the magnetic field strength is above or below the predetermined level or if the magnetic field strength is changing rapidly within a predetermined time span.

Example 60: The lanyard safety device (1) of any of examples 48-59, wherein the magnetic field sensor (20) is arranged inside a sealed environment, and/or is self-sealed.

Example 61: The lanyard safety device (1) of any of examples 47-60, wherein the first magnet (9) and second magnet (14) are coated with a corrosion-resistant material.

Example 62: The lanyard safety device (1) of examples 47-61, wherein a circumferential inner groove (7) is arranged in the housing (6), and a mechanical fastening mechanism (8) is arranged in the inner groove (7), the projection (11) of the plug part (10) comprises a circumferential outer groove (13), wherein the plug part (10) is releasable maintained in the base part (2) by the mechanical fastening mechanism (8) is attached to the outer groove (13).

Example 63: The lanyard safety device (1) of example 62, wherein the mechanical fastening (8) mechanism comprises a snap ring (17) and a polymeric O-ring (18).

Example 64: The lanyard safety device (1) of example 63, wherein the snap ring (17) is arranged inside the polymeric O-ring (18).

Example 65: The lanyard safety device (1) of any of examples 63-64, wherein the polymeric O-ring (18) is made of an elastic material.

Example 66: The lanyard safety device (1) of any of examples 63-65, wherein the snap ring (17) is configured to exert a radial force against the outer groove (13) of the plug part (10) to secure it within the socket.

Example 67: The lanyard safety device (1) of any of examples 63-66, wherein the snap ring (17) is made of an injection molded polymeric material to provide durability and consistent retention force over repeated use.

Example 68: The lanyard safety device (1) of any of examples 63-67, wherein the snap ring (17) and the polymeric O-ring (18) are arranged in a cooperative manner, such that the snap ring (17) maintains axial alignment of the plug part (10) while the O-ring (18) provides a sealing and biasing function in the radially direction.

Example 69: The lanyard safety device (1) of any of examples 63-67, wherein the snap ring (17) includes a beveled edge that facilitates the engagement and disengagement of the plug part (10) from the socket.

Example 70: The lanyard safety device (1) of any of examples 63-68, wherein the polymeric O-ring (18) is positioned adjacent to the snap ring (17) to absorb vibrations and reduce wear on the snap ring during the attachment and detachment of the plug part.

Example 71: The lanyard safety device (1) of any of examples 63-70, wherein the outer groove (13) comprises a first wall (22) arranged distal in relation to the plug head (12), the first wall has an inner face and an outer face, wherein the inner face and the outer face are rounded.

Example 72: The lanyard safety device (1) of any of examples 63-71, wherein the plug part (10) further comprises an alignment guide configured to facilitate correct positioning when attaching the plug part to the base part.

Example 73: The lanyard safety device (1) of any of examples 63-72, wherein the plug head (12) is ergonomically shaped to allow easy handling and attachment to the socket.

Example 74: A marine helm station (50) comprising the lanyard safety device (1) of any of the examples 47-73.

Example 75: A marine vessel (100) comprising an engine (101) and/or a motor and the marine helm station (50) of example 74.

Example 76: A lanyard safety device (1) for a marine helm station (50), comprising a base part (2) comprising a socket (3), the socket (3) having a first end (4), a second end (5) and a housing (6) extending between the first end and the second end, a circumferential inner groove (7) is arranged in the housing (6), a mechanical fastening mechanism (8) is arranged in the inner groove (7), a plug part (10) configured to be attached to the socket (3) of the base part, the plug part (10) comprising a projection (11) protruding from a plug head (12), the projection (11) comprises a circumferential outer groove (13), wherein the plug part (10) is releasable maintained in the base part (2) by the mechanical fastening mechanism (8) is attached to the outer groove (13).

Example 77: The lanyard safety device (1) of example 76, wherein the mechanical fastening (8) mechanism comprises a snap ring (17) and a polymeric O-ring (18).

Example 78: The lanyard safety device (1) of example 77, wherein the snap ring (17) is arranged inside the polymeric O-ring (18).

Example 79: The lanyard safety device (1) of any of examples 77-78, wherein the polymeric O-ring (18) is made of an elastic material.

Example 80: The lanyard safety device (1) of any of examples 77-79, wherein the snap ring (17) is configured to exert a radial force against the outer groove (13) of the plug part (10) to secure it within the socket.

Example 81: The lanyard safety device (1) of any of examples 77-80, wherein the snap ring (17) is made of an injection molded polymeric material to provide durability and consistent retention force over repeated use.

Example 82: The lanyard safety device (1) of any of examples 77-81, wherein the snap ring (17) and the polymeric O-ring (18) are arranged in a cooperative manner, such that the snap ring (17) maintains axial alignment of the plug part (10) while the O-ring (18) provides a sealing and biasing function in the radially direction.

Example 83: The lanyard safety device (1) of any of examples 77-82, wherein the snap ring (17) includes a beveled edge that facilitates the engagement and disengagement of the plug part (10) from the socket.

Example 84: The lanyard safety device (1) of any of examples 77-83, wherein the polymeric O-ring (18) is positioned adjacent to the snap ring (17) to absorb vibrations and reduce wear on the snap ring during the attachment and detachment of the plug part.

Example 85: The lanyard safety device (1) of any of examples 76-84, wherein the outer groove (13) comprises a first wall (22) arranged distal in relation to the plug head (12), the first wall has an inner face and an outer face, wherein the inner face and the outer face are rounded.

Example 86: The lanyard safety device (1) of any of examples 76-85, wherein the plug part (10) further comprises an alignment guide configured to facilitate correct positioning when attaching the plug part to the base part.

Example 87: The lanyard safety device (1) of any of examples 76-86, wherein the plug head (12) is ergonomically shaped to allow easy handling and attachment to the socket.

Example 88: The lanyard safety device (1) of any of examples 76-87, wherein the mechanical fastening mechanism (8) is configured to provide an audible click and/or tactile feedback when the plug part (10) is properly secured to the base part.

Example 89: The lanyard safety device (1) of any of examples 76-88, wherein the mechanical fastening mechanism (8) includes a biasing element to enhance the retention force of the plug part (10) in the base part.

Example 90: The lanyard safety device (1) of any of examples 76-89, wherein the mechanical fastening mechanism (8) is constructed to permit rotational movement of the plug part (10) when engaged with the base part.

Example 91: The lanyard safety device (1) of any of examples 76-90, wherein the plug part (10) comprises a built-in light source to enhance visibility in low-light conditions.

Example 92: The lanyard safety device (1) of any of examples 76-91, wherein a first magnet (9) being arranged at the second end of the housing, a second magnet (14) arranged within the projection (11) of the plug part, wherein the plug part (10) is releasable maintained in the base part (2) by a magnetic fastening between the first magnet (9) and the second magnet (14) and that the mechanical fastening mechanism (8) is attached to the outer groove (13), wherein the magnetic fastening doubles as a proximity sensor.

Example 93: The lanyard safety device (1) of example 92, wherein the first magnet (9) and the second magnet (14) are arranged with their poles in the same direction to increase a magnetic field, or in opposite direction to reduce the magnetic field at the location of a magnetic field sensor (20).

Example 94: The lanyard safety device (1) of any of examples 92-93, wherein the magnetic field strength is amplified or reduced, when the plug part (10) is attached in the base part (2).

Example 95: The lanyard safety device (1) of any of examples 92-94, wherein the first magnet (9) and the second magnet (14) comprise a base magnet, the base magnet comprises neodymium, steel, or other metals, and/or can be an electromagnet.

Example 96: The lanyard safety device (1) of any of examples 92-95, wherein a magnetic field sensor (20) is arranged in the base part (2) on an opposite side of the first magnet (9) in relation to the plug part (10).

Example 97: The lanyard safety device (1) of example 96, wherein the magnetic field sensor (20) is configured to detect a magnetic field strength of the first magnet (9) or the combination of the first magnet (9) and the second magnet (14).

Example 98: The lanyard safety device (1) of any of examples 96-97, wherein the magnetic field sensor (20) is configured to detect a magnetic field strength is below or above a predetermined level.

Example 99: The lanyard safety device (1) of any of examples 96-98, wherein the magnetic field sensor (20) is operatively connected with a control unit (21).

Example 100: The lanyard safety device (1) of any of examples 96-99, wherein the magnetic field sensor (20) is a Magneto-resistive sensor, a Micro Electronic Mechanical Systems (MEMS) sensor, a hall sensor, or a similar sensor configured to detect a magnetic field, or a combination thereof.

Example 101: The lanyard safety device (1) of example 99, wherein the control unit (21) is operatively connected with an engine or motor.

Example 102: The lanyard safety device (1) of example 101, wherein the control unit (21) based on output signals received from the magnetic field sensor (20) controls if the engine or motor can start or shall stop.

Example 103: The lanyard safety device (1) of any of examples 96-102, wherein the magnetic field sensor (20) is configured to detect the magnetic field strength continuously.

Example 104: The lanyard safety device (1) of any of examples 96-103, wherein the control unit (21) is configured to allow the engine or motor to start or stop if the magnetic field strength is above or below the predetermined level or if the magnetic field strength is changing rapidly within a predetermined time span.

Example 105: The lanyard safety device (1) of any of examples 92-104, wherein the magnetic field sensor (20) is arranged inside a sealed environment, and/or is self-sealed.

Example 106: A marine helm station (50) comprising the lanyard safety device (1) of any of the examples 76-105.

Example 107: A marine vessel (100) comprising an engine (101) and/or a motor and the marine helm station (50) of example 106.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A lanyard safety device (1) for a marine helm station (50), comprising a base part (2) comprising
a socket (3), the socket (3) having a first end (4), a second end (5) and a housing (6) extending between the first end and the second end, a circumferential inner groove (7) is arranged in the housing (6),
a mechanical fastening mechanism (8) is arranged in the inner groove (7),
a plug part (10) configured to be attached to the socket (3) of the base part, the plug part (10) comprising
a projection (11) protruding from a plug head (12), the projection (11) comprises a circumferential outer groove (13),
wherein the plug part (10) is releasable maintained in the base part (2) by the mechanical fastening mechanism (8) is attached to the outer groove (13).

2. The lanyard safety device (1) of claim 1, wherein the mechanical fastening (8) mechanism comprises a snap ring (17) and a polymeric O-ring (18).

3. The lanyard safety device (1) of claim 2, wherein the snap ring (17) is arranged inside the polymeric O-ring (18).

4. The lanyard safety device (1) of any of claims 2-3, wherein the polymeric O-ring (18) is made of an elastic material.

5. The lanyard safety device (1) of any of claims 2-4, wherein the snap ring (17) is configured to exert a radial force against the outer groove (13) of the plug part (10) to secure it within the socket.

6. The lanyard safety device (1) of any of claims 2-5, wherein the snap ring (17) includes a beveled edge that facilitates the engagement and disengagement of the plug part (10) from the socket.

7. The lanyard safety device (1) of any of claims 1-6, wherein the outer groove (13) comprises a first wall (22) arranged distal in relation to the plug head (12), the first wall has an inner face and an outer face, wherein the inner face and the outer face are rounded.

8. The lanyard safety device (1) of any of claims 1-7, wherein the mechanical fastening mechanism (8) includes a biasing element to enhance the retention force of the plug part (10) in the base part.

9. The lanyard safety device (1) of any of claims 1-8, wherein the base part (2) comprises a first magnet (9) being arranged at the second end (5), and the plug part (10) comprises a second magnet (14) arranged within the projection (11),
wherein the plug part (10) is releasable maintained in the base part (2) by a magnetic fastening between the first magnet (9) and the second magnet (14),
wherein the magnetic fastening doubles as a proximity sensor.

10. The lanyard safety device (1) of claim 9, wherein the first magnet (9) and the second magnet (14) are arranged with their poles in the same direction to increase a magnetic field, or in opposite direction to reduce the magnetic field at the location of a magnetic field sensor (20).

11. The lanyard safety device (1) of claim 10, wherein the magnetic field strength is amplified or reduced, when the plug part (10) is attached in the base part (2).

12. The lanyard safety device (1) of any of claims 10-11, wherein a magnetic field sensor (20) is arranged in the base part (2) on an opposite side of the first magnet (9) in relation to the plug part (10).

13. The lanyard safety device (1) of claim 12, wherein the magnetic field sensor (20) is operatively connected with a control unit (21).

14. A marine helm station (50) comprising the lanyard safety device (1) of any of the claims 1-13.

15. A marine vessel (100) comprising an engine (101) and/or a motor and the marine helm station (50) of claim 14.

16. A method for securing a plug part (10) to a base part (2) of a lanyard safety device (1) of any of the claims 1-13 for a marine helm station (50), comprising
- aligning a projection (11) of the plug part (10) with a socket (3) of the base part, the base part comprising a mechanical fastening mechanism (8) in an inner groove of a housing;
- inserting the projection (11) into the socket;
- engaging the mechanical fastening mechanism (8) with a circumferential outer groove (13) on the projection (11) to releasably maintain the plug part (10) in the socket.
